# EUROPÄISCHE PATENTSCHRIFT

(11) **EP 0 901 680 B1**
(45) Veröffentlichungstag und Bekanntmachung des Hinweises auf die Patenterteilung: **27.11.2002**
(21) Anmeldenummer: 98907876.1
(22) Anmeldetag: 30.01.1998
(51) Int. Cl.: G11B 17/26

(54) **VORRICHTUNG ZUM ABSPIELEN VON COMPACT-DISCS**
DEVICE FOR PLAYING COMPACT DISCS
DISPOSITIF DE LECTURE DE DISQUES COMPACTS

(30) Priorität: 14.02.1997 DE 19705624
(43) Veröffentlichungstag der Anmeldung: 17.03.1999
(73) Patentinhaber: ROBERT BOSCH GMBH, 70442 Stuttgart (DE)
(72) Erfinder: BECKER, Volker, D-31139 Hildesheim (DE); MINDL, Anton, D-31141 Hildesheim (DE); WESTENDORF, Thomas, D-31177 Harsum (DE); ZIMMERMANN, Holger, D-31141 Hildesheim (DE)
(86) Internationale Anmeldenummer: DE9800265
(87) Internationale Veröffentlichungsnummer: WO98036412

(56) Entgegenhaltungen:
- EP-A- 0 614 182
- DE-A- 4 406 078
- US-A- 4 730 292

## Beschreibung

### Stand der Technik

Die Erfindung betrifft eine Vorrichtung zum Abspielen von Compact-Discs, insbesondere für Kraftfahrzeuge, umfassend ein in einem Gehäuse angeordnetes und diesem entnehmbares Magazin für eine Mehrzahl von Compact-Discs und eine in dem Gehäuse frei schwingend gelagerte Abspieleinheit zum Abspielen einer Compact-Disc des Magazins.

Derartige Vorrichtungen zum Abspielen von Compact-Discs, auch CD-Wechsler genannt, werden hauptsächlich in Kraftfahrzeugen eingesetzt und bieten eine komfortable Möglichkeit zum Abspielen unterschiedlicher Compact-Discs aus einem in dem Magazin gelagerten Compact-Disc-Vorrat.

Die Bereithaltung der Compact-Discs in einem Magazin ermöglicht geringe Abmessungen der gesamten Vorrichtung. Darüber hinaus ist ein derartiges Magazin einfach und übersichtlich zu bestücken. Es ist des weiteren auch auf einfache Weise herzustellen.

Das Magazin und die Abspieleinheit haben unmittelbaren Einfluß auf den Aufbau der Vorrichtung zum Abspielen von Compact-Discs. Beispielsweise hängen die Außenabmessungen der gesamten Vorrichtung, die Erschütterungsfestigkeit und der Herstellungsaufwand wesentlich von der Ausgestaltung und Lagerung des Magazins und der Abspieleinheit ab.

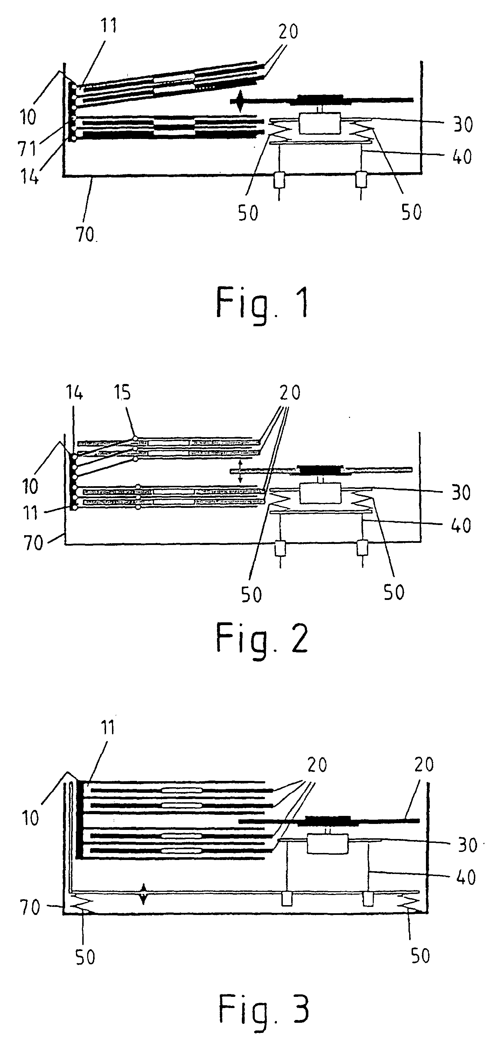

Es sind Vorrichtungen zum Abspielen von Compact-Discs für Kraftfahrzeuge bekannt, bei denen sowohl das Magazin als auch die Abspieleinheit und deren Verstellmechanik beim Betrieb der Vorrichtung fest gekoppelt sind und diese Gesamteinheit gegenüber dem Gehäuse frei schwingend aufgehängt ist (vgl. Fig. 3). Diese Art der Aufhängung ermöglicht eine relativ schmale Bauweise der Vorrichtung zum Abspielen von Compact-Discs, da eine abzuspielende Compact-Disc nicht vollständig aus dem Magazin herausgezogen werden und daher nur geringe Bewegungen ausführen muß. Da allerdings auch für diese Bewegungen ein freier Schwingungsraum erforderlich ist, müssen einzelne Fächer des Magazins eine verhältnismäßig große Höhe aufweisen, was wiederum zu einer großen Bauhöhe der gesamten Vorrichtung führt. Darüber hinaus ist die Vibrationsfestigkeit bei einer derartigen Vorrichtung problematisch, da die Abspieleinheit nicht durch beispielsweise eine elastische Aufhängung oder dgl. von der übrigen, zu Schwingungen neigenden Mechanik entkoppelt ist.

Um diesem Problem zu begegnen, ist es deshalb auch bekannt, lediglich die eigentliche Abspieleinheit elastisch aufzuhängen. Vorteilhaft bei derartigen Vorrichtungen ist eine elastische Abkopplung von der zu Schwingungen neigenden Mechanik. Darüber hinaus hat die Abspieleinheit auch eine sehr nahe konstruktive Verwandtschaft zu Vorrichtungen zum Abspielen einzelner Compact-Discs, sogenannten Single-Laufwerken. Diese Laufwerke lassen sich durch geringfügige Modifikation für den Einsatz in Vorrichtungen zum Abspielen von Compact-Discs in CD-Wechslern einsetzen.

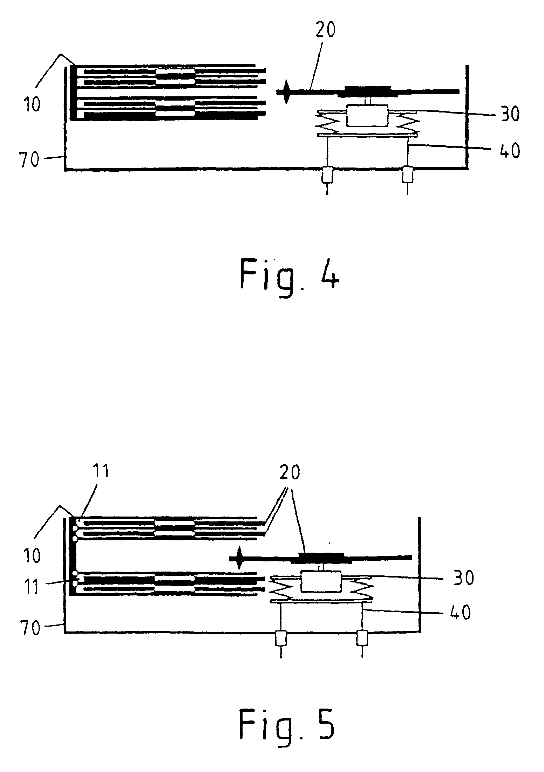

Eine Ausführungsform einer derartigen bekannten Vorrichtung zum Abspielen von Compact-Discs umfaßt ein in dem Gehäuse starr gelagertes Magazin mit verhältnismäßig schmalen Aufnahmefächern für die Compact-Discs. Zum Abspielen einer Compact-Disc wird diese ganz aus dem Magazin herausgezogen, so daß der erforderliche freie Bewegungs- oder Schwingungsraum für die Compact-Disc in jedem Fall gewährleistet ist. Diese Ausführungsform ermöglicht zwar eine verhältnismäßig flache, gleichzeitig aber sehr breite Bauform der gesamten Vorrichtung (vgl. Fig. 4).

Bei einer anderen Ausführungsform einer bekannten Vorrichtung zum Abspielen von Compact-Discs, bei der lediglich die Abspieleinheit elastisch gelagert ist, ist ein Schubmagazin vorgesehen, bei der diejenigen Compact-Discs, die beim Abspielen einer Compact-Disc der Abspieleinheit gegenüberliegen, von der abzuspielenden Compact-Disc zur Ausbildung eines freien Schwingungsraums für die abzuspielende Compact-Disc weggeschoben werden können. Eine derartige Vorrichtung setzt voraus, daß das Magazin mit einer entsprechenden translatorischen Verschiebemechanik ausgerüstet ist. Problematisch hierbei ist, daß für eine derartige Magazinkonstruktion eine sehr aufwendige Mechanik erforderlich ist, insbesondere wenn die Außenabmessungen der gesamten Vorrichtung kompakt gehalten werden sollen (vgl. Fig. 5).

Weiterhin ist aus der EP 0 614 182 A2 eine Vorrichtung zum Abspielen von Compact-Discs bekannt, welche ein in ein Gehäuseteil fest eingebautes Magazin mit Aufnahmefächern für Compact-Discs umfaßt. Das Magazin weist eine Schwenkmechanik auf, durch welche wenigstens ein Teil der in den Aufnahmefächern befindlichen Compact-Discs von einer auf einer Abspieleinheit angeordneten Compact-Disc zur Ausbildung eines freien Schwingraumes verschwenkbar ist. Die Schwenkmechanik umfaßt zwei Traggestelle mit einem kammförmigen oder zackenförmigen Querschnitt. Jeweils zwei benachbarte Vorsprünge der Traggestelle bilden zwischen sich eine Aufnahme aus, in die jeweils ein Aufnahmefach lose eingeschoben wird. Die Abstände zweier benachbarter Vorsprünge sind so groß bemessen, daß die in die Traggestelle eingeschobenen Aufnahmefächer darin schwenkbar sind. Das Magazin ist fest in das Gehäuse der Vorrichtung eingebaut.

Weiterhin ist aus der US 4 730 292 eine Vorrichtung zum Abspielen von Compact-Discs bekannt, welche ein Magazin aufweist, das aus einer Vielzahl von fächerförmig verschwenkbaren Aufnahmeplatten besteht, die um eine gemeinsame, senkrecht zu den Aufnahmeplatten verlaufende gemeinsame Drehachse drehbar gelagert sind und der Aufnahme von Compact-Discs dienen. Die Aufnahmeplatte mit der abzuspielenden Compact-Disc wird zur Abspieleinheit hingeschwenkt. Die Aufnahmeplatten sind in einer gemeinsamen in das Gerät einschiebbaren Baueinheit angeordnet, welche dem Gerät entnehmbar ist und gegen eine andere Einheit ausgetauscht werden kann.

### Vorteile der Erfindung

Die Vorrichtung zum Abspielen von Compact-Discs mit den kennzeichnenden Merkmalen des Anspruchs 1 weist den Vorteil auf, bei geringen Außenabmessungen und geringem Herstellungsaufwand und Herstellungskosten eine weitestgehende Erschütterungsfestigkeit der gesamten Vorrichtung zu gewährleisten, wobei daß das Magazin beim Bestücken mit Compact-Discs der Vorrichtung entnommen und vorteilhaft ähnlich einem Buch "durchblättert" werden kann, und so einen sofortigen Überblick über die im Magazin befindlichen Compact-Discs erlaubt. Das Magazin umfaßt eine Schwenkmechanik, durch welche wenigstens ein Teil der in dem Magazin befindlichen Compact-Discs von einer auf der Abspieleinheit befindlichen Compact-Disc zur Ausbildung eines freien Schwingraums zwischen der auf der Abspieleinheit befindlichen Compact-Disc und den in dem Magazin angeordneten Compact-Discs wegschwenkbar ist. Das Magazin ist dem Gehäuse entnehmbar und die Schwenkmechanik weist vorteilhaft mehrere an der von der Abspieleinheit abgewandten Seite des Magazins befestigte Klappscharniergelenke auf, wobei jedes Aufnahmefach für die Compact-Discs über jeweils wenigstens ein Klappscharniergelenk verschenkbar ist.

Eine vorteilhafte Ausführungsform, bei welcher insbesondere der Platzbedarf in verschwenktem Zustand des Magazins weiter reduziert ist, sieht vor, daß jeweils zwei Klappscharniergelenke an der der Abspieleinheit abgewandten Seite des Magazins derart angeordnet sind, daß die Aufnahmefächer der Compact-Discs zueinander und zu der auf der Abspieleinheit angeordneten Compact-Discs im wesentlichen parallel liegend gelagert und parallelogrammförmig verschwenkbar sind.

Hinsichtlich der Verschwenkung der Aufnahmefächer sind unterschiedliche Ausführungsformen denkbar. So kann beispielsweise die Verschwenkung manuell vorgenommen werden. Eine vorteilhafte Ausführungsform sieht vor, daß die Aufnahmefächer durch Stellmotoren verschwenkbar sind.

Die Befestigung des Magazins an dem Gehäuse kann prinzipiell auf die unterschiedlichste Art und Weise erfolgen.

Vorzugsweise ist das Magazin jedoch starr an einer Wand des Gehäuses befestigt.

Insbesondere hinsichtlich einer störsicheren und leicht bedienbaren Handhabung ist vorzugsweise ferner vorgesehen, daß die Schwenkmechanik bei aus dem Gehäuse entnommenem Magazin manuell oder automatisch ver-/entriegelbar ist.

### Zeichnung

Weitere Merkmale und Vorteile der Erfindung sind Gegenstand der nachfolgenden Beschreibung sowie der zeichnerischen Darstellung eines Ausführungsbeispiels, das in Gegenüberstellung zu aus dem Stand der Technik bekannten Vorrichtungen erläutert wird.

In der Zeichnung zeigen:
- Fig. 1: schematisch eine teilweise geschnittene Seitenansicht einer Ausführungsform einer erfindungsgemäßen Vorrichtung zum Abspielen von Compact-Discs;
- Fig. 2: schematisch eine teilweise geschnittene Seitenansicht einer anderen Ausführungsform einer erfindungsgemäßen Vorrichtung zum Abspielen von Compact-Discs;
- Fig. 3: schematisch eine aus dem Stand der Technik bekannte, teilweise geschnittene Seitenansicht einer Vorrichtung zum Abspielen von Compact-Discs;
- Fig. 4: eine andere aus dem Stand der Technik bekannte, teilweise geschnittene Seitenansicht einer Vorrichtung zum Abspielen von Compact-Discs und
- Fig. 5: eine weitere aus dem Stand der Technik bekannte, teilweise geschnittene Seitenansicht einer Vorrichtung zum Abspielen von Compact-Discs.

Eine aus dem Stand der Technik bekannte Vorrichtung zum Abspielen von Compact-Discs ist in Fig. 3 dargestellt.

Wie aus Fig. 3 hervorgeht, ist ein als Ganzes mit 10 bezeichnetes Magazin für Compact-Discs 20 zusammen mit einer Abspieleinheit 30 und deren Verstellmechanik 40 frei schwingend, beispielsweise über Federn 50, in einem Gehäuse 70 der Vorrichtung zum Abspielen von Compact-Discs 20 gelagert. Das Magazin 10 umfaßt Aufnahmefächer 11 zur Aufnahme der Compact-Discs 20, die verhältnismäßig hoch ausgebildet sind, um beispielsweise bei Erschütterungen der gesamten Vorrichtung, die vorzugsweise in Kraftfahrzeugen zum Einsatz kommt, zu verhindern, daß die Compact-Discs 20 an die Wände der Aufnahmefächer 11 stoßen.

Bei derartigen Vorrichtungen zum Abspielen von Compact-Discs 20 sind zum einen die aufgrund der hohen Aufnahmefächer 11 bauartbedingten hohen Magazine 10 problematisch zum andern wirkt sich die in sich zu Schwingungen neigende Mechanik des Magazins 10, der Abspieleinheit 30 und der Verstellmechanik 40 hinsichtlich der Vibrationsfestigkeit der gesamten Vorrichtung nachteilig auf einen störungsfreien Betrieb der Vorrichtung aus.

Bei anderen aus dem Stand der Technik bekannten Vorrichtungen zum Abspielen von Compact-Discs, dargestellt in Fig. 4 und Fig. 5, ist daher lediglich die Abspieleinheit 30 schwingend gelagert, wohingegen die Verstellmechanik 40 und das Magazin 10 in dem Gehäuse 70 starr gelagert sind.

Bei der in Fig. 4 dargestellten Vorrichtung zum Abspielen von Compact-Discs wird eine Compact-Disc 20 vollständig aus ihrem Aufnahmefach 11, das bei dieser Vorrichtung nur eine geringe Bauhöhe aufweist, zum Abspielen herausgezogen.

Hierdurch wird zwar eine geringe Bauhöhe des Gehäuses 70 ermöglicht. Diese ist aber nur möglich, weil das Gehäuse verhältnismäßig breit ausgebildet ist. Dies ist deshalb der Fall, weil die Abspieleinheit 30 so weit von dem Magazin 10 entfernt sein muß, daß bei einer abzuspielende Compact-Disc 20 ein genügender Schwingungsraum zur Verfügung steht. Die abzuspielende Compact-Disc 20 muß daher von dem Magazin 10 vollständig räumlich getrennt sein, so daß die Gehäusebreite größer als das Doppelte des Durchmessers einer Compact-Disc 20 sein muß.

Bei einer wiederum anderen aus dem Stand der Technik bekannten Ausführungsform (Fig. 5) ist das Magazin 10 als Schubmagazin ausgebildet, welches eine Verschiebung der Compact-Discs 20 in Vertikalrichtung ermöglicht, so daß einer abzuspielenden, auf der Abspieleinheit 30 angeordneten Compact-Disc ein genügender Schwingungsraum zur Verfügung steht. Eine derartige Vorrichtung ermöglicht zwar kompakte Außenabmessungen. Dadurch, daß jedoch eine Vertikalbewegung der Aufnahmefächer 11 mit einer Horizontalbewegung der Compact-Discs 20 kombiniert werden muß, um diese der Abspieleinheit 30 zuzuführen, ist eine aufwendige Verschiebemechanik erforderlich, die zum einen eine horizontale Bewegung einzelner Compact-Disc 20, andererseits kombiniert hierzu aber auch eine Vertikalbewegung eines oder mehrerer Aufnahmefächer 11 ermöglicht.

Eine Vorrichtung, bei der die obenerwähnten Probleme nicht auftreten, ist in Fig. 1 dargestellt. Wie aus Fig. 1 hervorgeht, ist das Magazin 10 an einer Gehäusewand 71 des Gehäuses 70 der Vorrichtung angeordnet. Die Abspieleinheit 30 ist über Federn 50 schwingend gelagert und durch eine Verstellmechanik 40, die ebenfalls in dem Gehäuse 70 befestigt ist, in Vertikalrichtung verstellbar.

Das Magazin 10 weist Aufnahmefächer 11 geringer Bauhöhe auf, in denen Compact-Discs 20 lagern. Zum Abspielen wird eine Compact-Disc 20 aus einem Aufnahmefach 11 entnommen und der Abspieleinheit 30 zugeführt. Um den für diese abzuspielende Compact-Disc 20 notwendigen freien Schwingungsraum zur Verfügung zu stellen, weist das Magazin eine Schwenkmechanik im Form von Klappscharniergelenken 14 auf, durch welche die Aufnahmefächer 11 für die Compact-Discs 20 verschwenkbar sind.

Die Klappscharniergelenke 14 sind an der der Abspieleinheit 30 abgewandten Seite des Magazins derart befestigt, daß die Aufnahmefächer 11 der Compact-Discs 20 parallel zueinander und zu der auf der Abspieleinheit 30 angeodneten, abzuspielenden Compact-Disc gelagert sind.

Die der abzuspielenden Compact-Disc gegenüberliegenden Aufnahmefächer 11 werden dabei von der abzuspielenden Compact-Disc weggeschwenkt, so daß sich ein genügend großer Schwingungsraum in dem Spalt zwischen den in dem Magazin 10 angeordneten und den wenigstens teilweise verschwenkten Aufnahmefächern 11 ergibt.

Die in Fig. 2 dargestellte weitere Ausführungsform einer Vorrichtung zum Abspielen von Compact-Discs unterscheidet sich von der in Fig. 1 dargestellten dadurch, daß neben den Klappscharniergelenken 14 weitere Klappscharniergelenke 15 derart angeordnet sind, daß die Aufnahmefächer 11 der Compact-Discs 20 zueinander und zu der auf der Abspieleinheit 30 angeordneten Compact-Disc 20 sowohl im verschwenkten als auch im nicht verschwenkten Zustand im wesentlichen parallel liegend gelagert und parallelogrammförmig verschwenkbar sind, so daß auch die verschwenkten Compact-Discs 20 im wesentlichen parallel liegend und daher besonders platzsparend zu der auf der Abspieleinheit 30 angeordneten Compact-Disc angeordnet sind.

Bei beiden Ausführungsbeispielen ist dabei die Verschwenkung so groß, daß der Öffnungswinkel der Schwenkmechanik bei entnommenem Magazin ausreicht, um den Typ der in den Aufnahmefächern 11 angeordneten Compact-Discs 20 ohne Entnahme der einzelnen Compact-Discs zu erkennen.

Die Verschwenkung eines Teils der oder sämtlicher Aufnahmefächer 11 wird dabei durch Stellmotoren vorgenommen.

Die Schwenkmechanik ist bei aus dem Gehäuse 70 entnommenen Magazin 10 manuell oder automatisch ver- und entriegelbar.

Es versteht sich, daß nicht nur ein Teil der in den Aufnahmefächern 11 angeordneten Compact-Discs 20 verschwenkt werden kann, wie es oben erläutert wurde und in Fig. 1 dargestellt ist. Möglich ist es vielmehr auch, sowohl die über der in der Abspieleinheit 30 angeordneten Compact-Disc angeordneten Aufnahmefächer 11 als auch die unterhalb dieser abzuspielenden Compact-Disc 20 angeordneten Aufnahmefächer 11 zu verschwenken, um hierdurch einen besonders großen freien Schwingungsraum zu ermöglichen.

## Patentansprüche

1. Vorrichtung zum Abspielen von Compact-Discs, insbesondere für Kraftfahrzeuge, umfassend ein in einem Gehäuse (70) angeordnetes Magazin (10) für eine Mehrzahl von Compact-Discs (20) und eine in dem Gehäuse (70) getrennt von dem Magazin (10) schwingend gelagerte und von einer Verstellmechanik verstellbare Abspieleinheit (30) zum Abspielen einer Compact-Disc (20) des Magazins (10), wobei das Magazin (10) eine Schwenkmechanik umfaßt, durch welche wenigstens ein Teil der in den Aufnahmefächern (11) des Magazins (10) befindlichen Compact-Discs (20) von einer auf der Abspieleinheit (30) angeordneten Compact-Disc (20) zur Ausbildung eines freien Schwingungsraums zwischen der auf der Abspieleinheit (30) angeordneten, abzuspielenden Compact-Disc (20) und den in den Aufnahmefächern (11) des Magazins (10) angeordneten Compact-Discs (20) verschwenkbar ist, **dadurch gekennzeichnet, daß** das Magazin (10) dem Gehäuse entnehmbar ist und die Schwenkmechanik mehrere an der von der Abspieleinheit (30) abgewandten Seite des Magazins (10) befestigte Klappscharniergelenke aufweist, wobei jedes Aufnahmefach (11) über jeweils wenigstens ein Klappscharniergelenk (14) verschwenkbar ist.

2. Vorrichtung nach Anspruch 1, **dadurch gekennzeichnet, daß** jeweils zwei Klappscharniergelenke (14, 15) an der der Abspieleinheit (30) abgewandten Seite des Magazins (10) derart angeordnet sind, daß die Aufnahmefächer (11) der Compact-Discs (20) zueinander und zu der auf der Abspieleinheit (30) angeordneten Compact-Disc (20) im wesentlichen parallel liegend gelagert und parallelogrammförmig verschwenkbar sind.

3. Vorrichtung nach einem der Ansprüche 1 und 2, **dadurch gekennzeichnet, daß** die Aufnahmefächer (11) durch Stellmotoren verschwenkbar sind.

4. Vorrichtung nach einem der Ansprüche 1 bis 3, **dadurch gekennzeichnet, daß** die Schwenkmechanik bei aus dem Gehäuse (70) entnommenen Magazin manuell oder automatisch ver-/ entriegelbar ist.

## Claims

1. Apparatus for playing compact discs, particularly for motor vehicles, comprising a magazine (10) arranged in a housing (70) for a plurality of compact discs (20) and a playback unit (30), which is mounted in the housing (70) separately from the magazine (10) so as to pivot and can be adjusted by an adjusting mechanism, for playing a compact disc (20) in the magazine (10), the magazine (10) comprising a tilt mechanism which allows at least some of the compact discs (20) which are in the holding compartments (11) in the magazine (10) to be tilted by a compact disc (20) arranged on the playback unit (30) in order to produce a free pivoting space between the compact disc (20) which is arranged on the playback unit (30) and is to be played and the compact discs (20) arranged in the holding compartments (11) in the magazine (10), **characterized in that** the magazine (10) can be removed from the housing, and the tilt mechanism has a plurality of folding hinges attached on the side of the magazine (10) which is remote from the playback unit (30), with each holding compartment (11) being able to tilt by means of at least one respective folding hinge (14).

2. Apparatus according to Claim 1, **characterized in that** two respective folding hinges (14, 15) are arranged on the side of the magazine (10) which is remote from the playback unit (30) such that the holding compartments (11) for the compact discs (20) can be tilted in the shape of a parallelogram with respect to one another and with respect to the compact disc (20) arranged on the playback unit (30), while being supported in an essentially parallel position.

3. Apparatus according to one of Claims 1 and 2, **characterized in that** the holding compartments (11) can be tilted by servomotors.

4. Apparatus according to one of Claims 1 to 3, **characterized in that** the tilting mechanism can be locked/unlocked manually or automatically when the magazine has been removed from the housing (70).

## Revendications

1. Dispositif de lecture de disques compacts notamment destiné à des véhicules automobiles, comprenant un magasin (10) placé dans un boîtier (70) pour un grand nombre de disques compacts (20) ainsi qu'une unité de lecture (30), réglable par un mécanisme d'actionnement, et qui est montée de manière oscillante séparément du magasin (10), cette unité servant à lire un disque compact (20) du magasin (10),
le magasin (10) comportant un mécanisme de basculement qui permet de basculer au moins une partie des disques compacts placés dans les compartiments de réception (11) du magasin (10) par rapport à un disque compact (20) placé dans l'unité de lecture (30) pour réaliser un espace d'oscillations libre entre le disque compact (20) à lire, placé dans l'unité de lecture (30) et les disques compacts (20) des compartiments (11) du magasin (10),
**caractérisé en ce que**
le magasin (10) peut s'extraire du boîtier et le mécanisme de basculement comporte plusieurs articulations à charnières pliantes, fixées sur le côté du magasin (10), à l'opposé de l'unité de lecture (30),
chaque compartiment (11) pouvant basculer par au moins une articulation à charnières pliantes (14).

2. Dispositif selon la revendication 1,
**caractérisé en ce que**
chaque fois deux articulations à charnières pliantes (14, 15) sont prévues sur le côté du magasin (10) à l'opposé de l'unité de lecture (30) de façon que les compartiments (11) des disques compacts (20) puissent être basculés à la manière d'un parallélogramme en restant essentiellement parallèles entre eux et par rapport au disque compact (20) placé dans l'unité de lecture (30).

3. Dispositif selon l'une quelconque des revendications 1 et 2,
**caractérisé en ce que**
les compartiments (11) sont basculés par des actionneurs.

4. Dispositif selon l'une quelconque des revendications 1 à 3,
**caractérisé en ce que**
le mécanisme de basculement se verrouille/déverrouille manuellement ou automatiquement lorsque le magasin est extrait du boîtier (70).
